# EUROPEAN PATENT APPLICATION

(11) **EP 4 567 966 A2**
(43) Date of publication of application: **11.06.2025**
(21) Application number: 24185759.8
(22) Date of filing: 01.07.2024
(51) Int. Cl.: H01M 10/613, H01M 10/647, H01M 10/653, H01M 50/474, H01M 50/48, H01M 50/55, H01M 10/654, H01M 10/6551, H01M 10/6553, H01M 50/103, H01M 50/553

(54) **SECONDARY BATTERY**

(30) Priority: 07.12.2023 KR 20230176136
(71) Applicant: Samsung SDI Co., Ltd., Yongin-si, Gyeonggi-do 17084 (KR)
(72) Inventor: KIM, Jeong Nam, 17084 Yongin-si (KR)
(74) Representative: Marks & Clerk LLP

(57) **Abstract**

A secondary battery includes: an electrode assembly (110); a case (180) including an inner space in which the electrode assembly is accommodated; a cap plate (186) configured to seal the case; a first electrode portion (130) electrically connected to the electrode assembly and fixed to the cap plate; a second electrode portion (160) spaced apart from the first electrode portion, electrically connected to the electrode assembly, and fixed to the cap plate; and a heat dissipation portion (200) between the electrode assembly and the cap plate and in contact with at least one of the first electrode portion or the second electrode portion.

## Description

### BACKGROUND

### 1. Field

Aspects of some embodiments of the present disclosure relate to a secondary battery.

### 2. Description of the Related Art

Unlike a primary battery that generally cannot be recharged, a secondary battery is a battery that can generally be recharged and discharged. A low-capacity secondary battery may be used in portable small-sized electronic devices, such as smartphones, feature phones, notebook computers, digital cameras, and camcorders, and a high-capacity secondary battery is widely used as a power source for driving a motor and a power storage battery in hybrid vehicles or electric vehicles. The secondary battery may include an electrode assembly including a positive electrode and a negative electrode, a case accommodating the electrode assembly, an electrode terminal connected to the electrode assembly, and the like.

The above information disclosed in this Background section is only for enhancement of understanding of the background and therefore the information discussed in this Background section does not necessarily constitute prior art.

### SUMMARY

Aspects of some embodiments of the present disclosure include a secondary battery capable of lowering the temperature of a component whose temperature is locally increased.

However, the characteristics of embodiments according to the present disclosure are not limited to the above-described characteristics, and other characteristics which are not described will be clearly understood by those skilled in the art from the following description.

A secondary battery according some embodiments of the present disclosure includes an electrode assembly, a case including an inner space in which the electrode assembly is accommodated, a cap plate configured to seal the case, a first electrode portion electrically connected to the electrode assembly and fixed to the cap plate, a second electrode portion spaced apart from the first electrode portion, electrically connected to the electrode assembly, and fixed to the cap plate, and a heat dissipation portion that is located between the electrode assembly and the cap plate and in contact with at least one of the first electrode portion or the second electrode portion to increase a heat dissipation area.

According to some embodiments, the first electrode portion may include a first connection portion, which is located below the cap plate, electrically connected to the electrode assembly, and in contact with the heat dissipation portion, and a first terminal portion having one side in contact with the first connection portion and the other side extending to the outside of the cap plate.

According to some embodiments, the first connection portion may include a first core member spaced apart from the electrode assembly and installed between the electrode assembly and the cap plate, and first side members extending from both sides of the first core member to be in contact with the electrode assembly, and electrically connected to the electrode assembly.

According to some embodiments, the heat dissipation portion may be in surface contact with an upper side of the first side member to increase a heat dissipation area.

According to some embodiments, a lower side of the heat dissipation portion may be in contact with the first side member, and an upper side of the heat dissipation portion may be in contact with an inner side of the cap plate.

According to some embodiments, the heat dissipation portion may be in surface contact with a lower side of the first core member to increase a heat dissipation area.

According to some embodiments, the second electrode portion may include a second connection portion, which is located below the cap plate, electrically connected to the electrode assembly, and in contact with the heat dissipation portion, and a second terminal portion having one side in contact with the second connection portion and the other side extending to the outside of the cap plate.

According to some embodiments, the second connection portion may include a second core member spaced apart from the electrode assembly and installed between the electrode assembly and the cap plate and second side members extending from both sides of the second core member to be in contact with the electrode assembly and electrically connected to the electrode assembly.

According to some embodiments, the heat dissipation portion may be in surface contact with an upper side of the second side member to increase a heat dissipation area.

According to some embodiments, a lower side of the heat dissipation portion may be in contact with the second side member, and an upper side of the heat dissipation portion may be in contact with an inner side of the cap plate.

According to some embodiments, the heat dissipation portion may be in surface contact with a lower side of the second core member to increase a heat dissipation area.

According to some embodiments, the heat dissipation portion may include at least one of a thermal interface material (TIM), graphite, a polyester film, a ceramic, or a metal composite material.

According to some embodiments, the first electrode portion and the second electrode portion may be fixed to both sides of the cap plate in a longitudinal direction, and the heat dissipation portion may be in surface contact with a cap assembly.

A secondary battery according to some embodiments of the present disclosure includes an electrode assembly including a first electrode tab and a second electrode tab installed in opposite directions, a case including an inner space in which the electrode assembly is accommodated, a first current collecting portion located between the case and the electrode assembly and between a cap plate and the electrode assembly, and electrically connected to the first electrode tab, a second current collecting portion located in an opposite direction from the first current collecting portion and electrically connected to the second electrode tab, a first terminal portion fixed to the cap plate and electrically connected to the first current collecting portion, a second terminal portion fixed to the cap plate and electrically connected to the second current collecting portion, a first heat dissipation portion installed at at least one of between the first current collecting portion and the case or between the first current collecting portion and the cap plate and configured to transfer the heat of the first current collecting portion to the case, and a second heat dissipation portion installed at at least one of between the second current collecting portion and the case or between the second current collecting portion and the cap plate and configured to transfer the heat of the second current collecting portion to the case.

A secondary battery according to some embodiments of the present disclosure includes an electrode assembly including a first electrode tab and a second electrode tab installed in opposite directions, a case including an inner space in which the electrode assembly is accommodated, a first current collecting portion located between a cap plate configured to seal the case and the electrode assembly and electrically connected to the first electrode tab, a second current collecting portion located in an opposite direction from the first current collecting portion and electrically connected to the second electrode tab, a first terminal portion fixed to the cap plate and electrically connected to the first current collecting portion, a second terminal portion fixed to the cap plate and electrically connected to the second current collecting portion, and a heat dissipation portion installed between the electrode assembly and a housing and configured to transfer the heat generated in the electrode assembly to the case.

A secondary battery according to some embodiments of the present disclosure includes an electrode assembly including a first electrode tab and a second electrode tab installed in opposite directions, a case including an inner space in which the electrode assembly is accommodated, a cap plate configured to seal the case, a first electrode portion electrically connected to the first electrode tab and fixed to the case, a second electrode portion electrically connected to the second electrode tab and fixed to the case, and a heat dissipation portion that is located inside the case and in contact with at least one of the first electrode portion, the second electrode portion, or the electrode assembly to increase a heat dissipation area.

According to some embodiments, the first electrode portion may include a first core member spaced apart from the electrode assembly and installed between the electrode assembly and the case, first side members extending from both sides of the first core member, connected to the first electrode tab, and electrically connected to the electrode assembly, and a first terminal portion having one side in contact with the first core member and the other side extending to the outside of the case.

According to some embodiments, the second electrode portion may include a second core member spaced apart from the electrode assembly and installed between the electrode assembly and the case, second side members extending from both sides of the second core member, connected to the second electrode tab, and electrically connected to the electrode assembly, and a second terminal portion having one side in contact with the second core member and the other side extending to the outside of the case.

According to some embodiments, the heat dissipation portion may include a first heat dissipation portion installed while being in contact with the first side member and the case and a second heat dissipation portion installed while being in contact with the second side member and the case.

According to some embodiments, the heat dissipation portion may include a third heat dissipation portion installed between the first core member and the electrode assembly and a fourth heat dissipation portion installed between the second core member and the electrode assembly.

At least some of the above and other features of the invention are set out in the claims.

### BRIEF DESCRIPTION OF DRAWINGS

The following drawings attached to the present specification illustrate aspects of some embodiments of the present disclosure, and serve to help the further understanding of embodiments according to the present disclosure together with the detailed description of the present disclosure provided below, and thus, embodiments according to the present disclosure should not be construed as being limited only to matters described in the drawings.
FIG. 1 is a perspective view of a secondary battery according to some embodiments of the present disclosure.
FIG. 2 is a perspective view illustrating an installation state of a heat dissipation portion according to some embodiments of the present disclosure.
FIG. 3 is a front view illustrating an installation state of the heat dissipation portion according to some embodiments of the present disclosure.
FIG. 4 is a front view illustrating an installation state of a heat dissipation portion according to some embodiments of the present disclosure.
FIG. 5 is a front view illustrating an installation state of a heat dissipation portion according to some embodiments of the present disclosure.
FIG. 6 is a front view illustrating a secondary battery according to some embodiments of the present disclosure.
FIG. 7 is a front view illustrating an installation state of a heat dissipation portion according to some embodiments of the present disclosure.
FIG. 8 is a front view illustrating an installation state of a heat dissipation portion according to some embodiments of the present disclosure.
FIG. 9 is a front view illustrating a secondary battery according to some embodiments of the present disclosure.
FIG. 10 is a front view illustrating an installation state of a heat dissipation portion according to some embodiments of the present disclosure.
FIG. 11 is a front view illustrating an installation state of a heat dissipation portion according to some embodiments of the present disclosure.

### DETAILED DESCRIPTION

Hereinafter, aspects of some embodiments of the present disclosure will be described in more detail with reference to the accompanying drawings. Terms or words used in the present specification and claims should not be construed as being limited to their usual or dictionary meanings and should be interpreted as meanings and concepts consistent with the technical idea of the present disclosure according to the principle that the inventors can appropriately define the concepts of terms in order to explain their own invention in the best way. Thus, it should be understood that there may be various equivalents and modified examples capable of replacing those embodiments and configurations at the time of filing this application.

In addition, the terms "comprise" or "include" and/or "comprising" or "including," when used in the present specification, specify the presence of stated features, numbers, steps, operations, members, elements, and/or groups thereof, but do not preclude the presence or addition of one or more other features, numbers, steps, operations, members, elements, and/or groups thereof.

Further, in order to aid in understanding of the invention, the accompanying drawings are not drawn to actual scale, and the dimensions of some components may be exaggerated. In addition, the same components in different embodiments may be given the same reference numeral.

When two objects of comparison are referred to as being the same, it means the two objects are "substantially the same." Thus, substantially the same may include a deviation that is considered low in the art, for example, a deviation of less than 5%. In addition, when a parameter is said to be uniform in a certain region, it may mean that the parameter is uniform from an average perspective.

Although "first," "second," and the like are used to describe various components, these components are of course not limited by these terms. These terms are only used to distinguish one component from other components, and unless otherwise stated, a first component could be called a second component.

Throughout the specification, unless specifically stated otherwise, each component may be singular or plural.

When an arbitrary element is referred to as being "located above (or below)" or "located on (or under)" a component, it may mean not only that the arbitrary element is located in contact with an upper surface (or lower surface) of the component, but also that other elements may be interposed between the component and the arbitrary element located on (or under) the component.

Further, it will be understood that when a component is referred to as being "on," "connected to," or "coupled to" another component, these components may be directly connected or coupled to each other, but other components may be "interposed" between each component, or each component may be "connected," or "coupled" through another component.

As used herein, the term "and/or" includes any and all combinations of one or more of the associated listed items. Further, the use of "may" when describing embodiments of the present disclosure refers to "one or more embodiments of the present disclosure." Expressions such as "one or more" and "at least one" before a list of elements modify the list of elements as a whole and do not modify individual elements in the list.

Throughout the specification, when "A and/or B" is used, it means A, B, or A and B, unless specifically stated otherwise, and when "C to D" is used, it means greater than or equal to C and less than or equal to D unless specifically stated otherwise.

When a phrase such as "at least one of A, B, and C," "at least one of A, B, or C," "at least one selected from groups A, B, and C," or "at least one selected from A, B, and C" is used to specify a list of elements A, B, and C, the phrase can refer to any suitable combination.

The term "use" may be considered synonymous with the term "utilize." As used herein, the terms "substantially," "about," and similar terms are used as terms of approximation and not as terms of degree, and are intended to account for the inherent deviations in measured or calculated values that would be recognized by those of ordinary skill in the art.

While the terms "first," "second," "third," and the like may be used herein to describe various elements, components, regions, layers, and/or sections, these elements, components, regions, layers, and/or sections should not be limited by these terms. These terms are only used to distinguish one element, component, region, layer, or section from another element, component, region, layer, or section. Thus, a first element, component, region, layer, or section discussed below could be called a second element, component, region, layer, or section, without departing from scope of the disclosed embodiments.

Spatially relative terms, such as "below," "beneath," "lower," "above," "upper," and the like, may be used herein for ease of description to describe one element or feature's relationship to another element(s) or feature(s) as illustrated in the drawings. It will be understood that the spatially relative terms are intended to encompass different orientations of the device in use or operation in addition to the orientation depicted in the figures. For example, when the device in the drawings is turned over, elements described as "below" or "beneath" other elements are understood to be oriented "on" or "above" the other elements. Thus, the term "below" can encompass both an orientation of above and below.

The terms used herein are for describing embodiments of the present disclosure and are not intended to limit the present disclosure.

A secondary battery 100 according to some embodiments of the present disclosure is described with reference to the drawings.

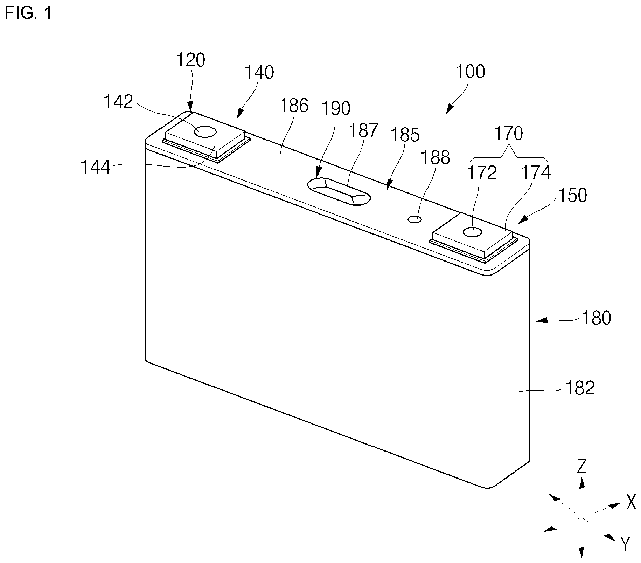

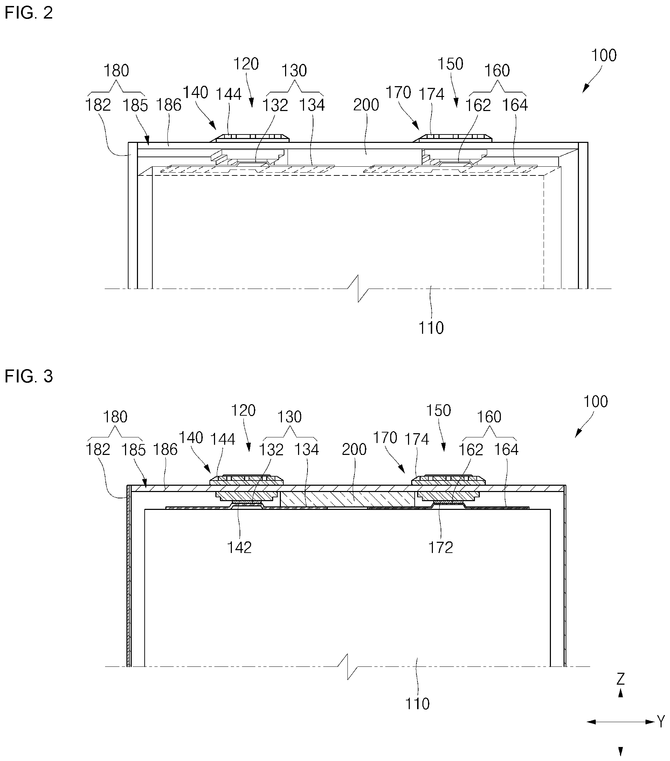

FIG. 1 is a perspective view of the secondary battery 100 according to some embodiments of the present disclosure, FIG. 2 is a perspective view illustrating an installation state of a heat dissipation portion 200 according to some embodiments of the present disclosure, and FIG. 3 is a front view illustrating an installation state of the heat dissipation portion 200 according to some embodiments of the present disclosure.

As shown in FIGS. 1 to 3, the secondary battery 100 according to some embodiments of the present disclosure includes an electrode assembly 110, a first electrode portion 120, a second electrode portion 150, a housing 180, and the heat dissipation portion 200. In addition, the secondary battery 100 may further include a safety vent 190.

During high-output discharge or rapid charging of the secondary battery 100, a high current is applied to a cell, and thus, a temperature increases locally at terminals or the like of the electrode assembly 110. The temperature increases locally at connection portions between the electrode assembly 110 and the first and second electrode portions 120 and 150, and the heat dissipation portion 200 is installed inside the housing 180 to reduce the temperature.

Because the heat dissipation portion 200 is installed inside the housing 180 while in contact with a portion where heat is locally increased, heat in a region where a temperature is locally increased can be released to a lower temperature region or to the outside.

The electrode assembly 110 may be formed by winding or stacking a laminate of a first electrode plate, a separator, and a second electrode plate, which are formed in a thin plate or film shape. When the electrode assembly 110 is a wound laminate, a winding axis may be parallel to a longitudinal direction Y of the housing 180. In addition, the electrode assembly 110 may be a stack type rather than a wound type, and the shape of the electrode assembly 110 is not limited in the present disclosure. In addition, the electrode assembly 110 may be a Z stack electrode assembly 110 in which a positive electrode plate and a negative electrode plate are inserted into both sides of a separator bent in a Z shape. In addition, one or more electrode assemblies 110 may be stacked with their long sides adjacent to each other and accommodated inside a case 182 provided in the housing 180, and the number of electrode assemblies 110 is not limited in the present disclosure. The first electrode plate of the electrode assembly 110 may serve as a negative electrode, and the second electrode plate thereof may serve as a positive electrode. Of course, the opposite is also possible.

Electrode tabs of the electrode assembly 110 according to some embodiments are all installed in the same direction. In an example, the electrode tabs of the electrode assembly 110 are installed toward an upper side (based on FIG. 3) of the electrode assembly 110 where a cap assembly 185 is installed, and are electrically connected to a first connection portion 130 and a second connection portion 160, respectively, which will be described in more detail below.

The first electrode plate may be formed by applying a first electrode active material such as graphite or carbon on a first electrode current collector plate formed of a metal foil such as copper, a copper alloy, nickel, or a nickel alloy.

The second electrode plate may be formed by applying a second electrode active material such as a transition metal oxide on a second electrode current collector plate formed of a metal foil such as aluminum or an aluminum alloy. The electrode assembly 110 may be accommodated in the housing 180 together with an electrolyte.

According to some embodiments, the separator may be located between the first electrode plate and the second electrode plate to prevent or reduce instances of a short circuit and enable the movement of lithium ions, and may include polyethylene, polypropylene, or a composite film of polyethylene and polypropylene. In addition, the separator may be replaced with an inorganic solid electrolyte, such as a sulfide-based, oxide-based, or phosphate-based electrolyte, which does not require a liquid or gel electrolyte.

According to some embodiments, the electrolyte may include a lithium salt, such as LiPF₆ or LiBF₄, in an organic solvent, such as ethylene carbonate (EC), propylene carbonate (PC), diethyl carbonate (DEC), ethyl methyl carbonate (EMC), or dimethyl carbonate (DMC). In addition, the electrolyte may be a liquid or gel. According to some embodiments, when the inorganic solid electrolyte is used, the electrolyte may be omitted.

The first electrode portion 120 may be modified into various shapes within the technical idea of electrically connecting the first electrode portion 120 to the electrode assembly 110 and fixing the first electrode portion 120 to the housing 180. The first electrode portion 120 according to some embodiments of the present disclosure includes the first connection portion 130 and a first terminal portion 140. In addition, the first electrode portion 120 may be installed on a cap plate 186 provided in the housing 180.

The first connection portion 130 may be modified into various shapes within the technical idea of locating the first connection portion 130 inside the housing 180, electrically connecting the first connection portion 130 to the electrode assembly 110, and bringing the first connection portion 130 into contact with the heat dissipation portion 200. The first connection portion 130 may electrically connect the electrode of the electrode assembly 110 to the first terminal portion 140.

In an example, the first connection portion 130 may include a first core member 132 that is spaced apart from the electrode assembly 110 and installed between the electrode assembly 110 and the housing 180, and first side members 134 that extend from both sides of the first core member 132 to be in contact with the electrode assembly 110 and are electrically connected to the electrode assembly 110.

The first core member 132 is installed while being spaced apart from the electrode assembly 110. The first core member 132 has a plate shape and is electrically connected to a first terminal pillar 142 provided in the first terminal portion 140. In addition, the first core member 132 may be located between the electrode assembly 110 and the cap plate 186. Alternatively, the first core member 132 may also be located between the electrode assembly 110 and the case 182.

The first side members 134 are located on both sides of the first core member 132 in the longitudinal direction Y. The first side members 134 extend in the longitudinal direction Y of the electrode assembly 110 and are electrically connected to the electrode assembly 110. The first side members 134 are installed while being in contact with the electrode assembly 110.

Because both sides of the first core member 132 are formed to be inclined toward the first side members 134, the first side members 134 are connected to both sides of the first core member 132.

The first terminal portion 140 may be modified into various shapes within the technical idea of bringing one side into contact with the first connection portion 130 and extending the other side to the outside of the cap plate 186 provided in the housing 180. According to some embodiments, the first terminal portion 140 may include the first terminal pillar 142 and a first terminal plate 144.

According to some embodiments, the first terminal pillar 142 may pass through the cap plate 186 of the cap assembly 185 to protrude and extend upward a predetermined length, and may be electrically connected to the first core member 132 of the first connection portion 130 at a lower side of the cap plate 186. According to some embodiments, the first terminal pillar 142 may be made of copper, a copper alloy, aluminum, or an aluminum alloy.

The first terminal plate 144 has a hole, and the first terminal pillar 142 may be coupled, riveted, and/or welded to the hole. According to some embodiments, a surface of the upwardly exposed first terminal pillar 142 may be welded to a facing surface of the first terminal plate 144. For example, a laser beam is applied to a boundary region of the upwardly exposed first terminal pillar 142 and a boundary region of the first terminal plate 144, so that the boundary regions may be welded to each other by being melted and then cooled. According to some embodiments, the first terminal pillar 142 and the first terminal plate 144 may be electrically insulated from the cap plate 186.

The second electrode portion 150 may be modified into various shapes within the technical idea of spacing the second electrode portion 150 apart from the first electrode portion 120, electrically connecting the second electrode portion 150 to the electrode assembly 110, and fixing the second electrode portion 150 to the housing 180. The second electrode portion 150 according to some embodiments of the present disclosure includes the second connection portion 160 and a second terminal portion 170. In addition, the second electrode portion 150 may be installed on the cap plate 186 provided in the housing 180.

The second connection portion 160 may be modified into various shapes within the technical idea of locating the second connection portion 160 inside the housing 180, electrically connecting the second connection portion 160 to the electrode assembly 110, and bringing the second connection portion 160 into contact with the heat dissipation portion 200.

The second connection portion 160 may electrically connect the electrode of the electrode assembly 110 to the second terminal portion 170. The second connection portion 160 may be installed between the cap plate 186 and the electrode assembly 110. When the cap plate 186 is located above the electrode assembly 110, the second connection portion 160 may be located above the electrode assembly 110 and below the cap plate 186.

In an example, the second connection portion 160 may include a second core member 162 that is spaced apart from the electrode assembly 110 and installed between the electrode assembly 110 and the cap plate 186, and second side members 164 that extend from both sides of the second core member 162 to be in contact with the electrode assembly 110 and are electrically connected to the electrode assembly 110.

The second core member 162 is installed while being spaced apart from the electrode assembly 110. The second core member 162 has a plate shape and is electrically connected to a second terminal pillar 172 provided in the second terminal portion 170.

The second side members 164 are located on both sides of the second core member 162 in the longitudinal direction Y. The second side members 164 extend in the longitudinal direction Y of the electrode assembly 110 and are electrically connected to the electrode assembly 110. The second side members 164 are installed while being in contact with the electrode assembly 110.

Because both sides of the second core member 162 are formed to be inclined toward the second side members 164, the second side members 164 are connected to both sides of the second core member 162.

The second terminal portion 170 may be modified into various shapes within the technical idea of bringing one side into contact with the second connection portion 160 and extending the other side to the outside of the cap plate 186. According to some embodiments, the second terminal portion 170 may include the second terminal pillar 172 and a second terminal plate 174.

According to some embodiments, the second terminal pillar 172 may pass through the cap plate 186 of the cap assembly 185 to protrude and extend upward a predetermined length, and may be electrically connected to the second core member 162 of the second connection portion 160 at the lower side of the cap plate 186. According to some embodiments, the second terminal pillar 172 may be made of copper, a copper alloy, aluminum, or an aluminum alloy.

The second terminal plate 174 has a hole, and the second terminal pillar 172 may be coupled, riveted, and/or welded to the hole. According to some embodiments, a surface of the upwardly exposed second terminal pillar 172 may be welded to a facing surface of the second terminal plate 174. For example, a laser beam is applied to a boundary region of the upwardly exposed second terminal pillar 172 and a boundary region of the second terminal plate 174, so that the boundary regions may be welded to each other by being melted and then cooled. According to some embodiments, the second terminal pillar 172 and the second terminal plate 174 may be electrically insulated from the cap plate 186.

The housing 180 may be modified into various shapes within the technical idea of the housing 180 including an inner space in which the electrode assembly 110 is accommodated. The housing 180 according to some embodiments of the present disclosure includes the case 182 and the cap assembly 185.

The case 182 may be modified into various shapes within the technical idea of the case 182 accommodating the electrode assembly 110 and including an open inlet. The case 182 may have a substantially rectangular parallelepiped shape with a hollow therein and an opening at an upper portion thereof. The electrode assembly 110 may be inserted into the case 182 through the opening. The case 182 may include a rectangular bottom surface and four side surfaces extending approximately vertically from four sides of the bottom surface. In addition, the case 182 may be modified into various shapes including a cylindrical shape.

The cap assembly 185 may be modified into various shapes within the technical idea of the cap assembly 185 blocking the inlet of the case 182 and being fixed to the case 182. In an example, the first electrode portion 120 and the second electrode portion 150 are fixed to the cap assembly 185, and the heat dissipation portion 200 may be in surface contact with the cap assembly 185. In an example, the cap assembly 185 may include the cap plate 186 and a stopper 188.

The cap plate 186 seals the opening of the case 182, and may be formed of the same material as the case 182. For example, although not limiting, the cap plate 186 may be coupled to the case 182 by a laser welding method. The cap plate 186 may further include an electrolyte injection hole and a vent hole 187 that pass through from an upper surface to a lower surface thereof.

The stopper 188 may seal the electrolyte injection hole after an electrolyte is injected into the housing 180 through the electrolyte injection hole of the cap plate 186.

The safety vent 190 is installed at a position facing the vent hole 187 of the cap plate 186, and may be opened at a set pressure.

The heat dissipation portion 200 is located inside the housing 180 provided in the secondary battery 100, and may be in contact with at least one of the first electrode portion 120 or the second electrode portion 150 to increase a heat dissipation area. The heat dissipation portion 200 may be located between the cap plate 186 and the electrode assembly 110.

In an example, the heat dissipation portion 200 may be modified into various shapes within the technical idea of attaching a component with a large thermal mass to a component with high heat generation to disperse the rapidly increasing heat to other regions. The heat dissipation portion 200 may be installed at each of the first connection portion 130 and the second connection portion 160, which are components with high heat generation. Because the heat dissipation portion 200 is installed while being in contact with the housing 180 having a large heat dissipation area, the heat generated in the first connection portion 130 and the second connection portion 160 can be released to the outside.

The heat dissipation portion 200 is attached to at least one of the first connection portion 130 or the second connection portion 160 to provide a heat dissipation function. Because the heat dissipation portion 200 is installed while being in contact with at least one of the case 182 or the cap assembly 185, the heat dissipation portion 200 can induce heat exchange with the air outside the housing 180. The heat dissipation portion 200 is made of a thermally conductive material.

In an example, the heat dissipation portion 200 may be made of at least one of a thermal interface material (TIM), graphite, a polyester film, a ceramic material, or a metal composite material.

The thermal interface material is made of thermally conductive rubber or silicon and effectively transfers the heat of the secondary battery 100. The thermal interface material usually has flexible properties and transfers heat.

Graphite is a material with excellent thermal conductivity and may be used for the heat dissipation portion 200. Graphite effectively transfers heat and may operate stably even in a high temperature environment.

The polyester film is a film with an intermediate level of thermal conductivity.

The ceramic material is a material resistant to heat and may transfer heat effectively and operate stably even at high temperatures.

The metal composite material is a combination of metal and other materials and used to relatively improve thermal conductivity, and may include metals such as aluminum and copper.

In addition, a composite material in which a thermal interface material and graphite are mixed may be used. In addition, a composite material in which a thermal interface material and a metal including aluminum or copper are mixed may be used.

In an example, the heat dissipation portion 200 may include at least one of a silicon-based material, a composite material of a combination of silicon and graphite, or a composite material of a combination of silicon and metal.

Silicon is a material with high thermal conductivity and may serve to effectively transfer heat when used in the heat dissipation portion 200. Silicon usually has flexible properties and may transfer heat.

The composite material, which is a combination of silicon and graphite, has high thermal conductivity and thus rapidly transfers heat. Graphite effectively transfers heat, and silicon transfers heat by making a material flexible and filling microscopic irregularities on a surface of the material, which helps to disperse heat effectively.

The composite material, which is a combination of silicon and metal, is obtained by combining silicon and metal (e.g., aluminum or copper) at a predetermined ratio, and the metal has high thermal conductivity and may effectively transfer heat by being combined with silicon. The composite material, which is a combination of silicon and metal, may rapidly dissipate heat and relatively improve the thermal stability of the heat dissipation portion 200.

The heat dissipation portion 200 may use a material with a large thermal mass. The term "thermal mass" is a term indicating the ability to store or absorb heat, and represents the physical properties of a material that reacts to heat, or stores and rapidly releases heat. A material with a large thermal mass can absorb and store heat with high efficiency, and thus can be effectively used to reduce thermal variations and stabilize temperatures. In an example, the heat dissipation portion 200 may be any one of mica, a composite material including mica and graphite, a composite material including mica and metal, and a composite material including mica and a thermal interface material.

Mica is used as an insulating material and has low thermal conductivity but a large thermal mass, and thus is effective at storing heat and releasing the heat later. Mica helps to mitigate temperature variations and relatively improve stability. Mica is an insulating material that blocks heat and electricity well and used in many heat-related applications.

The composite material including mica and graphite can relatively improve thermal conductivity while maintaining the thermal mass of the mica. Graphite can transfer and store heat rapidly, and thus, contribute to effective heat distribution and stabilization.

In the composite material obtained by combining mica and metal (e.g., aluminum or copper), the thermal conductivity of the metal is added while maintaining the thermal mass properties of mica, which not only helps to effectively store and distribute heat, but also relatively improves thermal stability.

The composite material including mica and a thermal interface material (TIM) is used to effectively store heat while rapidly transferring heat. The thermal interface material (TIM) may relatively improve thermochemical and thermodynamic properties and optimize thermal management.

The material with a large thermal mass and the corresponding composite material play an important role in improving thermal stability and reducing thermal variations in the thermal management application field. Thus, the use of a thermal mass material as a material of the heat dissipation portion 200 helps to improve the safety and optimize or improve the performance of the secondary battery 100.

In addition, when insulation is required, the heat dissipation portion 200 may include a plurality of insulating layers and a plurality of heat dissipation layers. The insulating layer may include at least one of mica, a thermal interface material (TIM), a ceramic, or silicon.

In addition, an insulating adhesive layer may be further provided in the heat dissipation portion 200. A double-sided tape, an adhesive, or the like may be used for the insulating adhesive layer. In addition, a metal such as aluminum and copper may be used for the heat dissipation layer, and graphite or a metal composite may also be used for the heat dissipation layer.

Electrode tabs of the positive electrode and the negative electrode are located above the electrode assembly 110, and the electrode tabs are electrically connected to the first electrode portion 120 and the second electrode portion 150, respectively. Thus, the first side member 134 and the second side member 164 are located below the cap assembly 185, and the heat dissipation portion 200 may be installed while being in contact with each of the first side member 134 and the second side member 164.

In an example, the heat dissipation portion 200 may be in surface contact with an upper side of the first side member 134 to increase a heat dissipation area. A lower side of the heat dissipation portion 200 may be in contact with the first side member 134, and an upper side of the heat dissipation portion 200 may be in contact with an inner side of the housing 180. In an example, the upper side of the heat dissipation portion 200 may be in contact with the cap plate 186 to increase a heat dissipation area.

In addition, the heat dissipation portion 200 may be in surface contact with an upper side of the second side member 164 to increase a heat dissipation area. The lower side of the heat dissipation portion 200 may be in contact with the second side member 164, and the upper side of the heat dissipation portion 200 may be in contact with the inner side of the housing 180.

The heat dissipation portion 200 according to some embodiments of the present disclosure is formed in a rectangular parallelepiped shape and a lower side surface or entirety thereof may be provided with insulation. Thus, the electrical connection between the first side member 134 and the second side member 164 may be prevented or reduced. Because the upper side of the heat dissipation portion 200 is in contact with the cap plate 186, heat generated in the first side member 134 and the second side member 164 can be guided to the outside of the cap plate 186.

When an external short circuit and thermal runaway occur while using the secondary battery 100, the first electrode portion 120 and the second electrode portion 150 may be overheated, which may cause deformation (warping) of the electrode assembly 110. Thus, by installing the heat dissipation portion 200 at each of the first electrode portion 120 and the second electrode portion 150, overheating of the first electrode portion 120 and the second electrode portion 150 may be prevented or reduced, thereby relatively improving the safety of the secondary battery 100.

In addition, the heat dissipation portion 200 presses each of the first side member 134 and the second side member 164 in a direction toward the electrode assembly 110, so that it is possible to prevent or reduce a phenomenon in which the first side member 134 and the second side member 164 are spaced apart from the electrode assembly 110 due to an external impact or vibrations or the like.

The lower side of the heat dissipation portion 200 is formed of an insulating layer, and the upper side of the heat dissipation portion 200 may be modified into various forms, such as using a composite material in which an insulating layer or a thermal interface material and a metal including aluminum or copper are mixed.

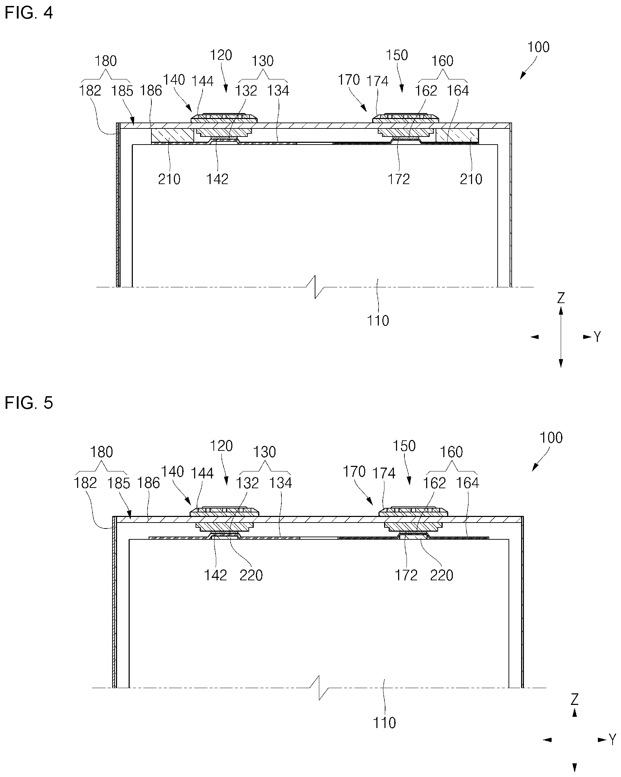

FIG. 4 is a front view illustrating an installation state of a heat dissipation portion 210 according to some embodiments of the present disclosure. As shown in FIG. 4, the heat dissipation portion 210 according to some embodiments may be in surface contact with an upper side of the first side member 134 to increase a heat dissipation area. The heat dissipation portion 210 may also be in surface contact with an upper side of the second side member 164 to increase a heat dissipation area.

The heat dissipation portion 210 may be installed on both the first side member 134 and the second side member 164, and may be installed on only one thereof if necessary. In addition, because an upper side of the heat dissipation portion 210 is installed while being in contact with the cap plate 186, the first side member 134 and the second side member 164 may be pressed in a direction toward the electrode assembly 110. At least one of an upper side surface or a lower side surface of the heat dissipation portion 210 may be formed of an insulating layer.

FIG. 5 is a front view illustrating an installation state of a heat dissipation portion 220 according to some embodiments of the present disclosure. As shown in FIG. 5, the heat dissipation portion 220 according to some embodiments of the present disclosure may be in surface contact with a lower side of the first core member 132 to increase a heat dissipation area. The heat dissipation portion 220 may also be in surface contact with a lower side of the second core member 162 to increase a heat dissipation area.

The heat dissipation portion 220 is formed in a plate shape, and includes the same or similar material as in the embodiments described above, for example, with respect to FIGS. 1-3. The heat dissipation portion 220 may be installed on both the first core member 132 and the second core member 162, and may be installed on only one thereof if necessary. The heat dissipation portion 220 may be installed while being in contact with each of the first core member 132 and the electrode assembly 110. In addition, the heat dissipation portion 200 may be installed while being in contact with each of the second core member 162 and the electrode assembly 110.

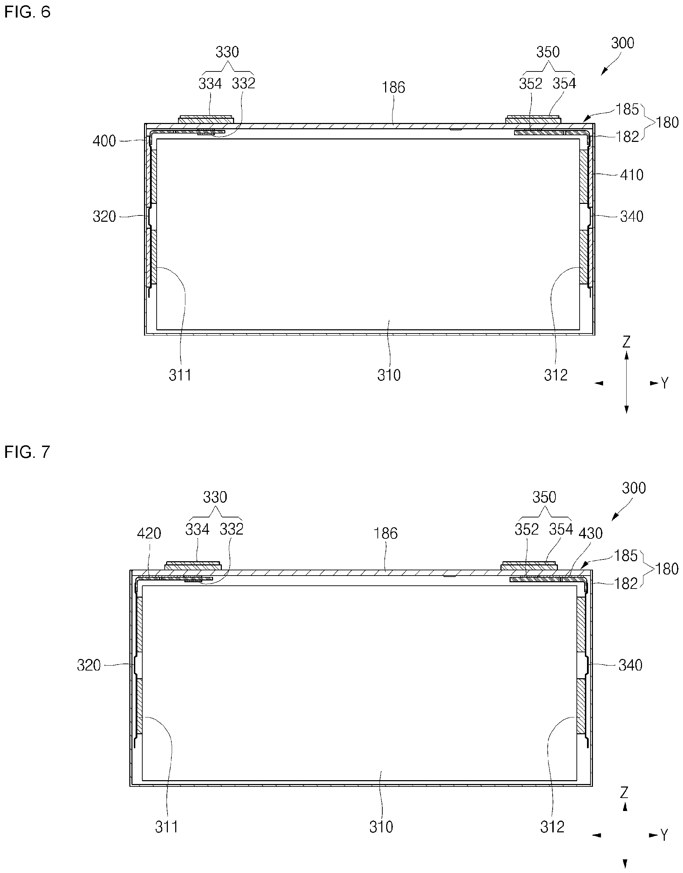

FIG. 6 is a front view illustrating a secondary battery 300 according to some embodiments of the present disclosure. As shown in FIG. 6, the secondary battery 300 according to some embodiments of the present disclosure includes an electrode assembly 310, a first current collecting portion 320, a second current collecting portion 340, a first terminal portion 330, a second terminal portion 350, a housing 180, a first heat dissipation portion 400, and a second heat dissipation portion 410.

The electrode assembly 310 includes a first electrode tab 311 and a second electrode tab 312 that are installed in opposite directions. The first electrode tab 311 is located on a first side (a left side based on FIG. 6) of the electrode assembly 310 in the longitudinal direction Y, and the second electrode tab 312 is located on a second side (a right side based on FIG. 6) of the electrode assembly 310 in the longitudinal direction Y.

The housing 180 may be modified into various shapes within the technical idea of housing 180 including an inner space in which the electrode assembly 310 is accommodated. In an example, the housing 180 may include a case 182 that accommodates the electrode assembly 310 and includes an open inlet, and a cap assembly 185 that blocks the inlet of the case 182 and is fixed to the case 182. The housing 180 is identical or similar to that in the embodiments described above, for example, with respect to FIGS. 1-3, and thus some detailed description thereof may be omitted.

The first current collecting portion 320 may be modified into various shapes within the technical idea of locating the first current collecting portion 320 between the housing 180 and the electrode assembly 310 and electrically connecting the first current collecting portion 320 to the first electrode tab 311. The first current collecting portion 320 electrically connects the first electrode tab 311 to the first terminal portion 330 installed on a cap plate 186.

According to some embodiments, the first current collecting portion 320 may be in contact with the first electrode tab 311 protruding from one end portion of the electrode assembly 310. In practical terms, the first current collecting portion 320 may be welded to the first electrode tab 311. According to some embodiments, the first current collecting portion 320 may be formed in a substantially '┌' shape, and a terminal hole may be formed in an upper portion thereof. According to some embodiments, a first terminal pillar 332 may be inserted into the terminal hole and riveted and/or welded thereto. According to some embodiments, the first current collecting portion 320 may be made of copper or a copper alloy.

The first terminal portion 330 may be modified into various shapes within the technical idea of fixing the first terminal portion 330 to the cap plate 186 of the housing 180 and electrically connecting the first terminal portion 330 to the first current collecting portion 320. The first terminal portion 330 includes the first terminal pillar 332 and a first terminal plate 334. The first terminal portion 330 is identical or similar to that in the embodiments described above, for example, with respect to FIGS. 1-3, and thus some detailed description thereof may be omitted.

The second current collecting portion 340 may be modified into various shapes within the technical idea of locating the second current collecting portion 340 in an opposite direction from the first current collecting portion 320 and electrically connecting the second current collecting portion 340 to the second electrode tab 312. The second current collecting portion 340 may be in contact with the second electrode tab 312 protruding from the other end portion of the electrode assembly 310. According to some embodiments, the second current collecting portion 340 may be formed in a substantially '┌' shape, and a terminal hole may be formed in an upper portion thereof. According to some embodiments, a second terminal pillar 352 is inserted into and coupled to the terminal hole. The second current collecting portion 340 may be made of, for example, but not limited to, aluminum or an aluminum alloy. The second terminal pillar 352 may pass through the cap plate 186, which will be described below, to protrude and extend upward a predetermined length, and may be electrically connected to the second current collecting portion 340 at a lower side of the cap plate 186.

The second terminal portion 350 may be modified into various shapes within the technical idea of fixing the second terminal portion 350 to the cap plate 186 of the housing 180 and electrically connecting the second terminal portion 350 to the second current collecting portion 340. The second terminal portion 350 includes the second terminal pillar 352 and a second terminal plate 354. The second terminal portion 350 is identical or similar to that in the embodiments described above, for example, with reference to FIGS. 1-3, and thus some detailed description thereof may be omitted.

The first heat dissipation portion 400 may be modified into various shapes within the technical idea of installing the first heat dissipation portion 400 between the first current collecting portion 320 and the case 182 provided in the housing 180 and transferring the heat of the first current collecting portion 320 to the case 182. The first heat dissipation portion 400 may be installed at at least one of between the first current collecting portion 320 and the case 182 or between the first current collecting portion 320 and the cap plate 186. The first heat dissipation portion 400 has a rectangular parallelepiped shape extending in a vertical direction Z and is installed while being in contact with each of an inner side of the case 182 and a side surface of the first current collecting portion 320. Thus, the heat generated in the first current collecting portion 320 can be cooled through the case 182.

The second heat dissipation portion 410 may be modified into various shapes within the technical idea of installing the second heat dissipation portion 410 between the second current collecting portion 340 and the case 182 provided in the housing 180 and transferring the heat of the second current collecting portion 340 to the case 182. The second heat dissipation portion 410 may be installed at at least one of between the second current collecting portion 340 and the case 182 or between the second current collecting portion 340 and the cap plate 186. The second heat dissipation portion 410 has a rectangular parallelepiped shape extending in the vertical direction Z and is installed while being in contact with each of the inner side of the case 182 and a side surface of the second current collecting portion 340. Accordingly, the heat generated in the second current collecting portion 340 can be cooled through the case 182.

FIG. 7 is a front view illustrating an installation state of heat dissipation portions 420 and 430 according to some embodiments of the present disclosure. As shown in FIG. 7, a first heat dissipation portion 420 according to some embodiments of the present disclosure may be modified into various shapes within the technical idea of installing the first heat dissipation portion 420 between the cap plate 186 and the first current collecting portion 320 and transferring the heat of the first current collecting portion 320 to the cap plate 186. The first heat dissipation portion 420 has a rectangular parallelepiped shape extending in the longitudinal direction Y and is installed while being in contact with each of the lower side of the cap plate 186 and an upper surface of the first current collecting portion 320. Thus, the heat generated in the first current collecting portion 320 can be cooled through the cap plate 186.

A second heat dissipation portion 430 according to some embodiments of the present disclosure may be modified into various shapes within the technical idea of installing the second heat dissipation portion 430 between the cap plate 186 and the second current collecting portion 340 and transferring the heat of the second current collecting portion 340 to the cap plate 186. The second heat dissipation portion 430 has a rectangular parallelepiped shape extending in the longitudinal direction Y and is installed while being in contact with each of the lower side of the cap plate 186 and an upper surface of the second current collecting portion 340. Thus, the heat generated in the second current collecting portion 340 can be cooled through the cap plate 186.

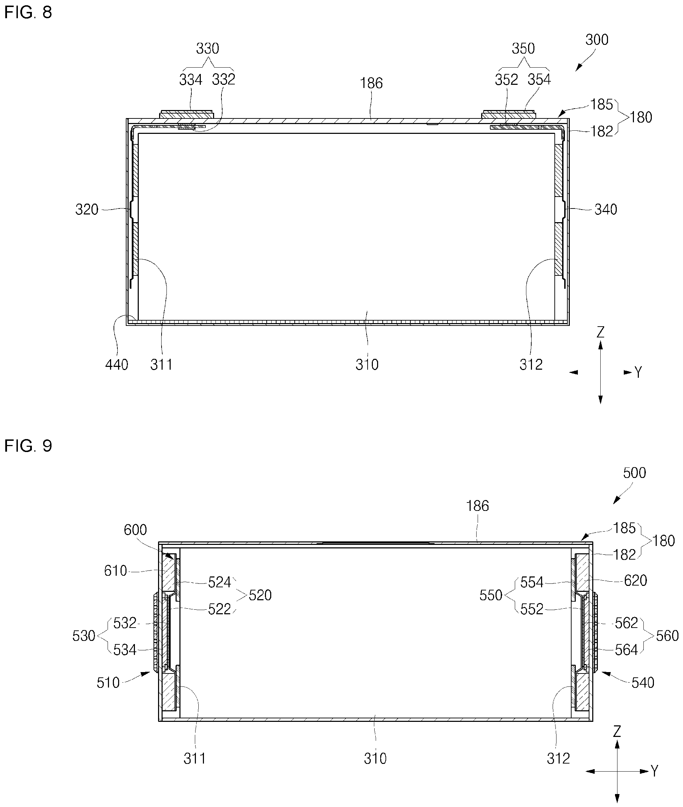

FIG. 8 is a front view illustrating an installation state of a heat dissipation portion 440 according to some embodiments of the present disclosure. As shown in FIG. 8, the heat dissipation portion 440 according to some embodiments of the present disclosure may be modified into various shapes within the technical idea of installing the heat dissipation portion 440 between the electrode assembly 310 and the case 182 provided in the housing 180 and transferring the heat generated in the electrode assembly 310 to a bottom surface of the case 182. The heat dissipation portion 440 extends in the longitudinal direction Y and is installed while being in contact with each of a lower side of the case 182 and a lower side of the electrode assembly 310.

The electrode assembly 310 may include a first electrode tab 311 and a second electrode tab 312 that are installed in opposite directions. The heat generated in the electrode assembly 310 may be transferred to the lower side of the case 182 through the heat dissipation portion 440 and dissipated.

FIG. 9 is a front view illustrating a secondary battery 500 according to some embodiments of the present disclosure. As shown in FIG. 9, the secondary battery 500 may include an electrode assembly 310, a first electrode portion 510, a second electrode portion 540, a housing 180, and a heat dissipation portion 600.

The electrode assembly 310 may be modified into various shapes within the technical idea of the electrode assembly 310 including a first electrode tab 311 and a second electrode tab 312 that are installed in opposite directions. In addition, the housing 180 includes an inner space in which the electrode assembly 310 is accommodated.

The housing 180 and the electrode assembly 310 are identical or similar to those described above, for example, with respect to FIG. 6, and thus some detailed description thereof may be omitted.

The first electrode portion 510 may be modified into various shapes within the technical idea of electrically connecting the first electrode portion 510 to the first electrode tab 311 and fixing the first electrode portion 510 to the housing 180. The first electrode portion 510 includes a first connection portion 520 and a first terminal portion 530.

The first connection portion 520 includes a first core member 522 spaced apart from the electrode assembly 310 and installed between the electrode assembly 310 and the housing 180, and first side members 524 that extend from both sides of the first core member 522 to be connected to the first electrode tab 311 and are electrically connected to the electrode assembly 310. The first core member 522 and the first side members 524 are similar or identical to those of the embodiments described above with respect to FIGS. 1-3, and thus some detailed description thereof may be omitted. The first side members 524 extend in the vertical direction Z and are electrically connected to the first electrode tab 311 of the electrode assembly 310. The first core member 522 protrudes to one side in the longitudinal direction Y toward the housing 180 and is electrically connected to the first terminal portion 530.

The first terminal portion 530 may be modified into various shapes within the technical idea of bringing one side into contact with the first core member 522 and extending the other side to the outside of the housing 180. The first terminal portion 530 includes a first terminal pillar 532 electrically connected to the first core member 522 and a first terminal plate 534 installed in a shape surrounding a periphery of the first terminal pillar 532. The first terminal portion 530 is fixed to one side of the housing 180 in the longitudinal direction Y.

The second electrode portion 540 may be modified into various shapes within the technical idea of electrically connecting the second electrode portion 540 to the second electrode tab 312 and fixing the second electrode portion 540 to the housing 180. The second electrode portion 540 includes a second connection portion 550 and a second terminal portion 560.

The second connection portion 550 includes a second core member 552 spaced apart from the electrode assembly 310 and installed between the electrode assembly 310 and the housing 180, and second side members 554 that extend from both sides of the second core member 552 to be connected to the second electrode tab 312 and are electrically connected to the electrode assembly 310. The second core member 552 and the second side members 554 are similar or identical to those described above, for example, with respect to FIGS. 1-3 of the present disclosure, and thus some detailed description thereof may be omitted. The second side members 554 extend in the vertical direction Z and are electrically connected to the second electrode tab 312 of the electrode assembly 310. The second core member 552 protrudes to the other side in the longitudinal direction Y toward the housing 180 and is electrically connected to the second terminal portion 560.

The second terminal portion 560 may be modified into various shapes within the technical idea of bringing one side into contact with the second core member 552 and extending the other side to the outside of the housing 180. The second terminal portion 560 includes a second terminal pillar 562 electrically connected to the second core member 552, and a second terminal plate 564 installed in a shape surrounding a periphery of the second terminal pillar 562. The second terminal portion 560 is fixed to one side of the housing 180 in the longitudinal direction Y.

The heat dissipation portion 600 may be modified into various shapes within the technical idea of locating the heat dissipation portion 600 inside the housing 180 and increasing a heat dissipation area while being in contact with at least one of the first electrode portion 510, the second electrode portion 540, or the electrode assembly 310. The heat dissipation portion 600 according to some embodiments of the present disclosure may include first heat dissipation portions 610 installed while being in contact with the first side members 524 and the housing 180, and second heat dissipation portions 620 installed while being in contact with the second side members 554 and the housing 180.

The first heat dissipation portion 610 extends in the vertical direction Z and is located between the first side member 524 and one side surface of the housing 180. The first heat dissipation portion 610 is installed while being in contact with a side surface of the case 182, which is located on one side (a left side based on FIG. 9) of the case 182 in the longitudinal direction Y. The heat generated in the first side member 524 is transferred to the housing 180 through the first heat dissipation portion 610 and dissipated.

The second heat dissipation portion 620 extends in the vertical direction Z and is located between the second side member 554 and the other side surface of the housing 180. The second heat dissipation portion 620 is installed while being in contact with a side surface of the case 182, which is located at the other side (a right side based on FIG. 9) of the case 182 in the longitudinal direction Y. The heat generated in the second side member 554 is transferred to the housing 180 through the second heat dissipation portion 620 and dissipated.

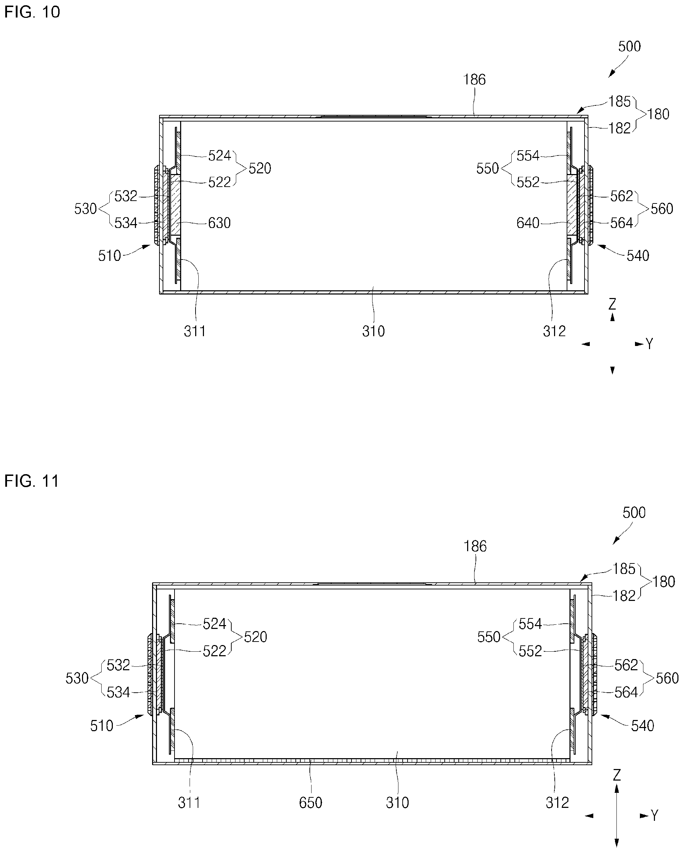

FIG. 10 is a front view illustrating an installation state of heat dissipation portions 630 and 640 according to some embodiments of the present disclosure. As shown in FIG. 10, the heat dissipation portions 630 and 640 according to some embodiments of the present disclosure may include a third heat dissipation portion 630 installed between the first core member 522 and the electrode assembly 310, and a fourth heat dissipation portion 640 installed between the second core member 552 and the electrode assembly 310.

The third heat dissipation portion 630 extends in the vertical direction Z and is installed while being in contact with one end portion of each of the first core member 522 and the electrode assembly 310. The increase in heat dissipation area through the third heat dissipation portion 630 may prevent or reduce deterioration of the durability of the secondary battery 500 due to overheating caused by the heat generated in the first core member 522.

The fourth heat dissipation portion 640 extends in the vertical direction Z and is installed while being in contact with one end portion of each of the second core member 552 and the electrode assembly 310. The increase in heat dissipation area through the fourth heat dissipation portion 640 may prevent or reduce deterioration of the durability of the secondary battery 500 due to overheating caused by the heat generated in the second core member 552.

FIG. 11 is a front view illustrating an installation state of a heat dissipation portion 650 according to some embodiments of the present disclosure. As shown in FIG. 11, a fifth heat dissipation portion 650, which is a heat dissipation portion according to some embodiments of the present disclosure, is installed between the electrode assembly 310 and the housing 180. Thee fifth heat dissipation portion 650 may be modified into various shapes within the technical idea of installing the fifth heat dissipation portion 650 between the electrode assembly 310 and the housing 180 and transferring the heat generated in the electrode assembly 310 to the housing 180. The fifth heat dissipation portion 650 extends in the longitudinal direction Y and is installed while being in contact with each of a lower side of the case 182 and a lower side of the electrode assembly 310.

According to some embodiments of the present disclosure, the temperature of a component whose temperature is locally increased can be lowered, so that high output or rapid charging can be stably achieved.

Further, the heat generated inside a housing of a secondary battery can be quickly guided to the outside of the housing, so that the safety of the secondary battery can be relatively improved.

However, the effects obtained through the present disclosure are not limited to the above-described effects, and other technical effects not described may be clearly understood by a person skilled in the art from the following description of the invention.

Embodiments according to the present disclosure are not limited to the above-described embodiments. As claimed in the following claims, and their equivalents, the characteristics of embodiments according to the present disclosure includes the scope in which various changes can be made by anyone skilled in the art without departing from scope of embodiments according to the present disclosure.

## Claims

1. A secondary battery comprising:
an electrode assembly;
a case including an inner space in which the electrode assembly is accommodated;
a cap plate configured to seal the case;
a first electrode portion electrically connected to the electrode assembly and fixed to the cap plate;
a second electrode portion spaced apart from the first electrode portion, electrically connected to the electrode assembly, and fixed to the cap plate; and
a heat dissipation portion between the electrode assembly and the cap plate and in contact with at least one of the first electrode portion or the second electrode portion.

2. The secondary battery as claimed in claim 1, wherein the first electrode portion includes:
a first connection portion below the cap plate and electrically connected to the electrode assembly, and in contact with the heat dissipation portion; and
a first terminal portion having one side in contact with the first connection portion and the other side extending to the outside of the cap plate.

3. The secondary battery as claimed in claim 2, wherein the first connection portion includes:
a first core member spaced apart from the electrode assembly and installed between the electrode assembly and the cap plate; and
first side members extending from both sides of the first core member to be in contact with the electrode assembly, and electrically connected to the electrode assembly.

4. The secondary battery as claimed in claim 3, wherein the heat dissipation portion is in surface contact with an upper side of the first side member.

5. The secondary battery as claimed in claim 4, wherein a lower side of the heat dissipation portion is in contact with the first side member, and
an upper side of the heat dissipation portion is in contact with an inner side of the cap plate.

6. The secondary battery as claimed in claim 3, wherein the heat dissipation portion is in surface contact with a lower side of the first core member.

7. The secondary battery as claimed in any preceding claim, wherein the second electrode portion includes:
a second connection portion below the cap plate and electrically connected to the electrode assembly, and in contact with the heat dissipation portion; and
a second terminal portion having one side in contact with the second connection portion and the other side extending to the outside of the cap plate.

8. The secondary battery as claimed in claim 7, wherein the second connection portion includes:
a second core member spaced apart from the electrode assembly and installed between the electrode assembly and the cap plate; and
second side members extending from both sides of the second core member to be in contact with the electrode assembly, and electrically connected to the electrode assembly, and either:
a) wherein the heat dissipation portion is in surface contact with an upper side of the second side member to increase a heat dissipation area, and optionally
a lower side of the heat dissipation portion is in contact with the second side member, and
an upper side of the heat dissipation portion is in contact with an inner side of the cap plate, or
b) wherein the heat dissipation portion is in surface contact with a lower side of the second core member.

9. The secondary battery as claimed in any preceding claim, wherein the heat dissipation portion includes at least one of a thermal interface material (TIM), graphite, a polyester film, a ceramic, or a metal composite material.

10. The secondary battery as claimed in any preceding claim, wherein the first electrode portion and the second electrode portion are fixed to both sides of the cap plate in a longitudinal direction, and
the heat dissipation portion is in surface contact with a cap assembly.

11. A secondary battery comprising:
an electrode assembly including a first electrode tab and a second electrode tab installed in opposite directions;
a case including an inner space in which the electrode assembly is accommodated;
a cap plate configured to seal the case;
a first current collecting portion between the case and the electrode assembly and between the cap plate and the electrode assembly, and electrically connected to the first electrode tab;
a second current collecting portion located in an opposite direction from the first current collecting portion and electrically connected to the second electrode tab;
a first terminal portion fixed to the cap plate and electrically connected to the first current collecting portion;
a second terminal portion fixed to the cap plate and electrically connected to the second current collecting portion;
a first heat dissipation portion installed at at least one of between the first current collecting portion and the case or between the first current collecting portion and the cap plate, and configured to transfer heat of the first current collecting portion to the case; and
a second heat dissipation portion installed at at least one of between the second current collecting portion and the case or between the second current collecting portion and the cap plate, and configured to transfer heat of the second current collecting portion to the case.

12. The secondary battery as claimed in claim 11, wherein the heat dissipation portion includes at least one of a thermal interface material (TIM), graphite, a polyester film, a ceramic, or a metal composite material.

13. A secondary battery comprising:
an electrode assembly including a first electrode tab and a second electrode tab installed in opposite directions;
a case including an inner space in which the electrode assembly is accommodated;
a cap plate configured to seal the case;
a first current collecting portion between the case and the electrode assembly and between the cap plate and the electrode assembly, and electrically connected to the first electrode tab;
a second current collecting portion located in an opposite direction from the first current collecting portion and electrically connected to the second electrode tab;
a first terminal portion fixed to the cap plate and electrically connected to the first current collecting portion;
a second terminal portion fixed to the cap plate and electrically connected to the second current collecting portion; and
a heat dissipation portion between the electrode assembly and the case and configured to transfer heat generated in the electrode assembly to the case.

14. A secondary battery comprising:
an electrode assembly including a first electrode tab and a second electrode tab installed in opposite directions;
a case including an inner space in which the electrode assembly is accommodated;
a cap plate configured to seal the case;
a first electrode portion electrically connected to the first electrode tab and fixed to the case;
a second electrode portion electrically connected to the second electrode tab and fixed to the case; and
a heat dissipation portion inside the case and in contact with at least one of the first electrode portion, the second electrode portion, or the electrode assembly.

15. The secondary battery as claimed in claim 14, wherein the first electrode portion includes:
a first core member spaced apart from the electrode assembly and installed between the electrode assembly and the case;
first side members extending from both sides of the first core member, connected to the first electrode tab, and electrically connected to the electrode assembly; and
a first terminal portion having one side in contact with the first core member and the other side extending to the outside of the case, and
the second electrode portion includes:
a second core member spaced apart from the electrode assembly and installed between the electrode assembly and the case;
second side members extending from both sides of the second core member, connected to the second electrode tab, and electrically connected to the electrode assembly; and
a second terminal portion having one side in contact with the second core member and the other side extending to the outside of the case, and optionally
a) wherein the heat dissipation portion includes:
a first heat dissipation portion installed while being in contact with the first side member and the case; and
a second heat dissipation portion installed while being in contact with the second side member and the case, and/or
b) wherein the heat dissipation portion includes:
a third heat dissipation portion between the first core member and the electrode assembly; and
a fourth heat dissipation portion between the second core member and the electrode assembly.
